# EUROPEAN PATENT APPLICATION

(11) **EP 2 472 309 A2**
(43) Date of publication of application: **04.07.2012**
(21) Application number: 11008437.3
(22) Date of filing: 20.10.2011
(51) Int. Cl.: G02F 1/13357

(54) **Display apparatus having a backlight unit with uniform brightness**

(30) Priority: 28.12.2010 KR 20100136777
(71) Applicant: LG Electronics Inc., Youngdungpo-gu, Seoul 150-721 (KR)
(72) Inventor: Mangeun, Kim, Seoul 137-724 (KR); Moogoo, Choi, Seoul 137-724 (KR); Seonghun, Kwon, Seoul 137-724 (KR); Park, Chilkeun, Seoul 137-724 (KR); Lee, Hyunho, Seoul 137-724 (KR); Kang, Taegu, Seoul 137-724 (KR); Sangcheon, Kim, Seoul 137-724 (KR); Seongman, Jeon, Seoul 137-724 (KR)
(74) Representative: Beyer, Andreas

(57) **Abstract**

A display apparatus includes a display panel and a backlight unit. The backlight unit includes a first layer (21), a light source (22), a light guide layer (24) having a hollow (242) for receiving the light source, the light guide layer being to transmit and diffuse light emitted from the light source, and a reflection member e.g. a reflector (241,241a) to reflect at least one portion of the light emitted from the light source toward the inside of the light guide layer. A position of the light emitted from the light source may pass through the light screening layer (25) to proceed toward the display panel. The forming part (253) may have an inclined structure. A second layer (23) extracts or reflects the light emitted from the light source toward the display panel. A light extraction pattern (231) diffuses the light emitted from the light source up to the adjacent light source at uniform brightness.

## Description

### CROSS-REFERENCE TO RELATED APPLICATIONS

The present application claims the benefits of priority to Korean Patent Application No. 10-2010-0136777 (filed on December 28, 2010), which is herein incorporated by reference in its entirety.

### BACKGROUND

The present disclosure relates to a display apparatus.

As our information society develops, needs for diverse forms of display apparatuses are increasing. Accordingly, research has been carried out on various display apparatuses such as liquid crystal display devices (LCDs), plasma display panels (PDPs), electro luminescent displays (ELDs), and vacuum fluorescent displays (VFDs).

Of these, such an LCD includes a liquid crystal panel. The liquid crystal panel includes a liquid crystal layer, TFT substrates with the liquid crystal layer therebetween and facing each other, and a color filter substrate. The liquid crystal panel may use light supplied from a backlight unit to display an image because it does not emit light.

A light source mounted on the backlight unit may be one of a light emitting diode (LED) chip or an LED package including at least one LED chip.

The LED package constituting the light source may be classified into a top view type and a side view type according to a direction of a light emitting surface.

Recently, a flat fluorescent lamp (FFL) or a surface light source (SLS) is being actively applied as a light source for an LCD panel. The surface light source may represent a light source which uniformly emits light through a surface thereof and does not have a thickness. Thus, since the surface light source is utilized, the backlight unit may become thinner to realize miniaturization of the display apparatus.

### SUMMARY

Embodiments provide a backlight unit having a surface light source structure which is capable of effectively diffusing and transmitting light onto the entire surface thereof by using an LED light source, and a display apparatus having the same.

In one embodiment, a display apparatus includes: a display panel; and a backlight unit disposed at a rear side of the display panel to provide light, wherein the backlight unit includes: a first layer; a light source disposed on the first layer; a light guide layer having a hollow for receiving the light source, the light guide layer being disposed above the first layer to transmit and diffuse light emitted from the light source; and a reflection member disposed in the hollow to reflect at least one portion of the light emitted from the light source to the display panel toward the inside of the light guide layer.

In another embodiment, a display apparatus includes: a display panel; and a backlight unit disposed at a rear side of the display panel to provide light, wherein the backlight unit includes: a first layer; a light source disposed on the first layer; a reflection member reflecting at least one portion of ligth emitted from the light source to the display panel; and a light guide layer disposed on the first layer to transmit and diffuse the light emitted from the light source, wherein a groove for receiving the light source is defined in a bottom surface of the light guide layer, and a reflection groove for receiving the reflection member is defined in a top surface of the light guide layer.

The details of one or more embodiments are set forth in the accompanying drawings and the description below. Other features will be apparent from the description and drawings, and from the claims.

### BRIEF DESCRIPTION OF THE DRAWINGS

- Fig. 1: is an exploded perspective view illustrating a display module of a display apparatus according to an embodiment.
- Fig. 2: is a plan view of a reflector according to an embodiment.
- Fig. 3: is a sectional view taken along line I-I' of Fig. 1.
- Fig. 4: is a plan view of a reflector according to another embodiment.
- Fig. 5: is a cut-away perspective view of the reflector.
- Fig. 6: is a cross-sectional view of a backlight unit according to a first embodiment.
- Fig. 7: is a cross-sectional view of a backlight unit according to a second embodiment.
- Fig. 8: is a cross-sectional view of a backlight unit according to a third embodiment.
- Fig. 9: is a cross-sectional view of a backlight unit according to a fourth embodiment.
- Fig. 10: is a cross-sectional view of a backlight unit according to a fifth embodiment.
- Fig. 11: is a cross-sectional view of a backlight unit according to a sixth embodiment.
- Fig. 12: is a view illustrating a process of attaching a reflective material of Fig. 11 to a bottom surface of a light shield layer.
- Fig. 13: is a view illustrating another example of the process of attaching the reflective material of Fig. 11 to the bottom surface of the light shield layer.
- Fig. 14: is a cross-sectional view of a backlight unit according to a seventh embodiment.
- Fig. 15: is a cross-sectional view of a backlight unit according to an eighth embodiment.
- Fig. 16: is a cross-sectional view of a backlight unit according to a ninth embodiment.
- Fig. 17: is a view illustrating a structure of a reflector according to another embodiment.
- Fig. 18: is a cross-sectional view of a backlight unit according to a tenth embodiment.
- FIG. 19: is a plan view of a reflector seated on the backlight unit according to the tenth embodiment.
- Fig. 20: is a view illustrating a structure of a reflector according to another embodiment.
- Fig. 21: is a cross-sectional view of a backlight unit according to an eleventh embodiment.
- Fig. 22: is a cross-sectional view of a backlight unit according to a twelfth embodiment.
- Fig. 23: is a cut-away perspective view illustrating a structure of a light guide layer according to another embodiment.

### DETAILED DESCRIPTION OF THE EMBODIMENTS

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

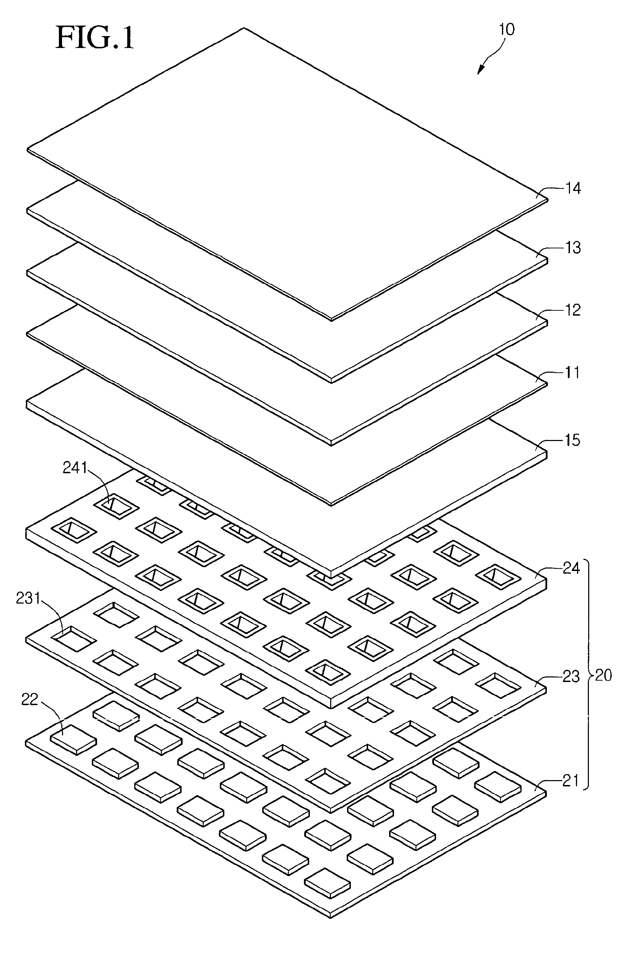

Fig. 1 is an exploded perspective view illustrating a display module of a display apparatus according to an embodiment.

Referring to Fig. 1, a display module 10 according to an embodiment includes a display panel and a backlight unit 20.

In detail, the display panel includes a color filter substrate 13 and a thin film transistor substrate 12 which are attached facing each other to maintain a constant cell gap therebetween. A liquid crystal layer (not shown) may be disposed between the two substrates 13 and 12.

The color filter substrate 13 includes a plurality of pixels constituted by red R, green G, and blue B sub pixels. Also, the color filter substrate 13 may produce image corresponding to red, green, and blue colors when light is applied to the color filter substrate 13.

Although the pixels are constituted by the red, green, and blue sub pixels in the current embodiment, the present disclosure is not limited thereto. For example, the red, green, blue, and white W sub pixels may constitute one pixel or a combination thereof may constitute one pixel.

The TFT substrate 12 may function as a switching device to switch a pixel electrode (not shown). For example, a common electrode (not shown) and the pixel electrode may convert arrangement of molecules of the liquid crystal layer according to a predetermined voltage applied from the outside.

The liquid crystal layer includes a plurality of liquid crystal molecules. The liquid crystal molecules may be arranged corresponding to a voltage difference generated between the pixel electrode and the common electrode. Thus, light provided from the backlight unit 20 may be incident into the color filter substrate 13 to correspond to a variation of the molecule arrangement of the liquid crystal layer.

Also, the display panel further includes a lower polarizer 11 disposed on a bottom surface of the TFT substrate 12 and an upper polarizer 14 seated on a top surface of the color filter substrate 13.

Also, the backlight unit 20 may further include an optical sheet 15 disposed under the lower polarizer 14.

The optical sheet 15 may include a diffusion plate and/or a diffusion sheet which diffuse(s) light emitted from the light source to produce planar light and a prism sheet for collecting the light diffused from the diffusion sheet.

The backlight unit 20 may fixedly adhere to an under surface of the display panel, i.e., the lower polarizer 11. As described above, since the backlight unit 20 is closely attached to the display panel 10, the display module may be reduced in thickness. Also, since a structure for fixing the backlight unit 20 is removed, the display module may be simplified in structure and manufacturing process.

Also, since a space between the backlight unit 20 and the display panel is removed, it may prevent foreign substances from being introduced into the space. Thus, it may prevent the display module from being malfunctioned or image quality of the display apparatus from being deteriorated.

According to an embodiment, the backlight unit 20 may have a structure in which a plurality of functional layers are stacked with each other. Also, a plurality of light sources may be mounted on at least one layer of the plurality of functional layers.

Also, the plurality of layers constituting the backlight unit 20 may be formed of a flexible material to closely attach the backlight unit 20 to the under surface of the display panel. The backlight unit 20 may be directly attached to a front surface of a back cover defining a rear outer appearance of the display apparatus. Thus, the total thickness of the display device may be reduced to realize miniaturization of the display apparatus.

According to an embodiment, the display panel may be divided into a plurality of areas. A light source mounted on an area of the backlight unit 20 corresponding to each of the divided areas may be adjusted in brightness according to a gray peak value or color coordinate signal required in each of the divided areas to adjust brightness of the display panel. For this, the backlight unit 20 may be divided into a plurality of division driving areas respectively corresponding to the divided areas of the display panel to allow local dimming.

The backlight unit 20 includes a first layer 21, a plurality of light sources 22 mounted on a top surface of the first layer 21, a second layer 23 disposed on the top surface of the first layer 21, and a light guide layer 24 disposed to a top surface of the second layer 23. Also, a hollow 242 for receiving each of the light sources 22 is defined in the light guide layer 24. The hollow 242 is covered by a reflector 241.

In detail, the first layer 21 may be a circuit board on which the plurality of light sources 22 are mounted. Also, an adaptor for supplying a power and an electrode pattern for connect the light sources 22 to each other may be disposed on the first layer 21. For example, a carbon nano tube electrode pattern for connecting the light sources 22 to the adaptor may be disposed on a top surface of the first layer 21.

Also, the first layer 21 may be a PCB formed of polyethylene terephthlate (PET), glass, polycarbonate (PC), or silicon (Si), on which the plurality of light sources 22 are mounted. Alternatively, the first layer 21 may be a flexible film type PCB.

The light source 22 may be one of an LED chip or an LED package including at least one LED chip. In the current embodiment, the LED package is exemplified as the light source 22.

The LED package constituting the light source 22 may be classified into a top view type LED package and a side view type LED package according to the direction of a light emitting surface. The top view type LED package which emits light upward will be exemplified as the light source 22.

The light source 22 may also be a color LED emitting at least one of red, blue, and green light, or a white LED. The color LED may include at least one of a red LED, a blue LED, and a green LED, and the arrangement and light emission type of the LEDs may be varied within the technical scope of the embodiment.

The light guide layer 24 may be disposed above the first layer 21 to surround the plurality of light sources 22. The light guide layer 24 may transmit light emitted from the light source 22 toward the display panel and also diffuse the light to uniformly provide the light emitted from the light source 22 to the display panel.

For example, the light guide layer 24 may be formed of a silicon- or acryl-based resin. However, the material of the light guide layer 24 is not limited thereto. For example, the light guide layer 24 may be formed of one of various resins. The light guide layer 24 may be formed of a resin having a refractive index of about 1.4 to 1.6 so that light emitted from the light source 22 is diffused to ensure the uniform brightness of the backlight unit 20.

For example, the light guide layer 24 may be formed of at least one selected from the group consisting of polyethyeleneterepthalate (PET), polycarbonate (PC), polypropylene (PP), polyethylene (PE), polystyrene (PS), polyepoxy (PE), silicone, and acrylic.

The light guide layer 24 may include an adhesive polymer resin so that the light guide layer 24 firmly adheres to the second layer 23. For example, the light guide layer 24 may include unsaturated polyester; an acrylic-based material such as methylmethacrylate, ethylmethacrylate, isobutyl methacrylate, normal butyl methacrylate, normal butyl methylmethacrylate, acrylic acid, methacrylic acid, hydroxyl ethylmethacrylate, hydroxyl propyl methacrylate, hydroxyl ethyl acrylate, acryl amide, methylol acryl amide, glycidyl methacrylate, ethyl acrylate, isobutyl acrylate, normal butyl acrylate, and 2-ethyl hexyl acrylate polymer, copolymer, or therpolymer; an urethane-based material; an epoxy-based material; and a melamine-based material.

The light guide layer 24 may be formed by coating a liquid or gel resin on the plurality of light sources 22 and the second layer 23 and curing the resin. Alternatively, the light guide layer 24 may be separately injection-molded to adhere to a top surface of the first layer 21.

Also, a plurality of dispersion particles may be provided in the light guide layer 24. In detail, the dispersion particles disperse and refract light emitted from the light sources 22 to more widely diffuse the light.

In detail, to disperse and reflect the light emitted from the light source 24, the dispersion particles may be formed of a material having a refractive index different from that of the material forming the light guiding layer 24, i.e., be formed of a material having a refractive index greater than that of a silicone-based or acrylic-based resin forming the light guiding layer 24.

For example, the dispersion particles may be formed of poly methyl methacrylate/styrene copolymer (MS), poly methyl metaacrylate (PMMA), poly styrene (PS), silicone, titanium dioxide (TiO₂), silicon dioxide (SiO₂), or a combination thereof.

The dispersion particles may be formed of a material having a refractive index lower than that of the material forming the light guide layer 24. For example, bubbles may be formed within the light guide layer 24 to form the dispersion particles. Here, the material forming the dispersion particles is not limited to the above-described materials. For example, the dispersion particles may be formed using various polymer or inorganic particles.

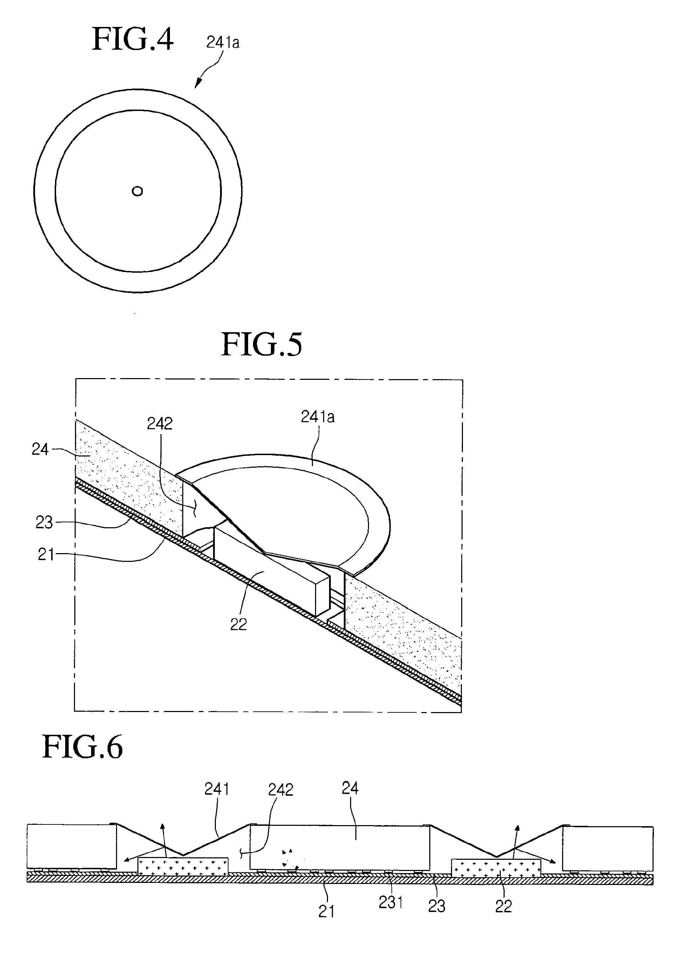

The second layer 23 is disposed between the first layer 21 and the light guide layer 24. The second layer 23 is a layer for extracting or reflecting the light emitted from the light source 22 toward the display panel. Thus, the second layer 23 may be referred to as a light extraction layer or reflection layer. A light extraction pattern (see reference numeral 231 of Fig. 6) may be disposed on a top surface of the second layer 23 to effectively extract the bumping light emitted from the light source 22 toward the display panel. The light extraction pattern 231 may be referred to as a diffusion pattern because the light extraction pattern 231 diffuses the light emitted from the light source 22 up to the adjacent light source at uniform brightness.

The light extraction pattern 231 may be formed of at least one of a metal or metal oxide that is a reflective material. For example, the light extraction pattern 231 may be formed of a metal or metal oxide having high reflectivity such as aluminum (Al), silver (Ag), gold (Au), or titanium dioxide (TiO₂). In this case, the light extraction pattern 231 may be formed by depositing or coating the metal or metal oxide on the second layer 23. Alternatively, the light extraction pattern 231 may be formed by printing metal ink.

Also, the second layer 23 may be a sheet in which a white pigment such as titanium oxide is dispersed among sheets formed of a synthetic resin material, a sheet in which a metal deposition layer is stacked on a surface thereof, or a sheet in which bubbles are dispersed to scatter light among the sheets of the synthetic resin material. Also, to increase the reflectivity, Ag may be coated on a surface of the second layer 23. The second layer 23 may be directly coated on the top surface of the first layer 21.

Also, a light source hole 232 through which the light source passes is defined in the second layer 23 to prevent the light source 22 and the second layer 23 from interfering with each other.

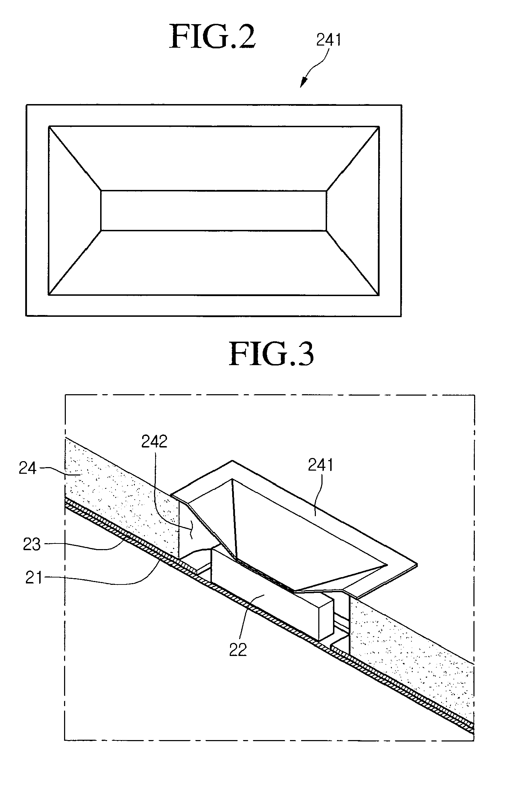

Fig. 2 is a plan view of a reflector according to an embodiment. Fig. 3 is a sectional view taken along line I-I' of Fig. 1.

Referring to Figs. 2 and 3, a hollow 242 for receiving each of light sources 22 is defined in a light guide layer 24. Also, a reflector 241 is seated on the hollow 242. A punching process may be performed on a light guide layer 24 manufactured through a separate injection molding process to form the hollow 242. Alternatively, a resin may be directly molded on a top surface of a second layer 23 to form the hollow 242. In detail, the reflector 241 may transmit a portion of light emitted directly upward from a top view type light source 22 and reflect a portion of the light. When the whole light emitted from the light source 22 is transmitted toward the display panel, a light density may be concentrated into an area adjacent to the light source 22. As a result, a hot spot phenomenon in which the area adjacent to the light source 22 has brightness greater than that of the surrounding of an area spaced from the light source 22 may occur. Thus, light supplied from the backlight unit 20 to the display panel may have non-uniform brightness due to the hot spot phenomenon. Therefore, picture quality of the display apparatus may be deteriorated. Also, as the light guide layer 24 is decreased in thickness, the possibility of the hot spot phenomenon may be further increased.

To solve this limitation, the reflector 241 may be disposed above the light source 22. Thus, light emitted upward from the light source 22 may be laterally reflected to induce light diffusion within the light guide layer 24. As a result, light having uniform brightness may be emitted from the backlight unit 20.

The reflector 241 may be formed of a material which transmits a portion of the light emitted from the light source 22 to proceed toward the display panel and reflects the other portion of the light to diffuse the light into the light guide layer 24. If the light emitted from the light source 22 is totally reflected, dark spots may be generated on an area on which the light source 22 is disposed. Accordingly, a portion of the light may be transmitted to maintain the uniform brightness equal to that of the surrounding area.

For example, to effectively reflect and transmit the light emitted from the light source 22, Ag or Al having high reflectance may be coated on a potion of the reflector 241. The reflector 241 may be formed of the same material as a light extraction pattern 231. Alternatively, the same material as the light extraction pattern 231 may be attached to a surface of a thin film to form the reflector 241.

Also, as shown in Figs. 2 and 3, the reflector 241 may have a width gradually decreasing downward toward the light source 22. This is done because the light emitted from the light source 22 is incident into the reflector 241 and laterally reflected. Also, the reflector 241 may have a trapezoid shape or an inverted triangle shape in section. An upper end of the reflector 241 may extend laterally. Also, the upper end of the reflector 241 may be hooked on an edge of the hollow 242. Thus, the reflector 241 may be stably coupled to the light guide layer 24.

Fig. 4 is a plan view of a reflector according to another embodiment. Fig. 5 is a cut-away perspective view of the reflector.

Referring to Figs. 4 and 5, a reflector 241a according to another embodiment may have a cone shape in which an apex of the reflector 241a is adjacent to a top surface of a light source 22. Thus, light incident into a surface of the cone may be diffused into a light guide layer 24. Also, the reflector 241a may have a cone shape which is horizontally cut at a position spaced from the apex of the reflector 241a. That is, the reflector 241a may have a cone shape having the same sectional shape as that of the reflector of Fig. 3.

Fig. 6 is a cross-sectional view of a backlight unit according to a first embodiment.

Referring to Fig. 6, a backlight unit 20 according to a first embodiment includes a first layer 21, a second layer 23, a light guide layer 24, a light source 22 mounted on the first layer 21, and a reflector 241 seated on a hollow 242 of the light guide layer 24 to receive the light source 22.

In detail, the reflector 241 may be the reflector having the same structure as that of Fig. 2 or 4. Also, the light guide layer 24 may be manufactured through separate injection molding and then coupled to a top surface of the first layer 21. Then, a resin material may pour onto the top surface of the first layer 21 to cure the resin material. Also, a punching or molding process may be performed to form the hollow 242. The reflector 241 may be seated and coupled to a top surface of an edge of the hollow 242.

In the above-described structure, light emitted from the light source 22 is incident into an inclined surface of the reflector 241. Also, a portion of light incident into the reflector 241 may be transmitted toward the display panel, and a portion of the light may be reflected and then diffused into the light guide layer 24. Also, a portion of the light diffused into the light guide layer 24 may bump against dispersion particles existing inside the light guide layer 24 and then be re-diffused toward the light source 22 adjacent thereto. Also, the other portion of the light diffused into the light guide layer 24 may bump against a light extraction pattern 231 disposed on the second layer 23 and thus be diffused or dispersed in various directions. As described above, the light may be uniformly dispersed over the entire inside of the light guide layer 24 according to a vibration of a light path in several times to secure uniform brightness of the backlight unit 20.

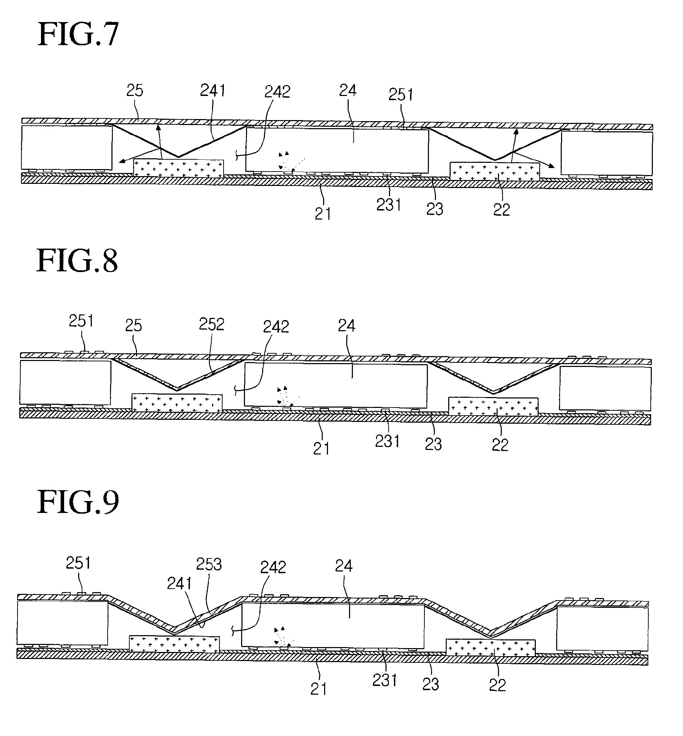

Fig. 7 is a cross-sectional view of a backlight unit according to a second embodiment.

Referring to FIG. 7, the current embodiment has the same structure as that of the first embodiment except that a light screening layer 25 is disposed on a top surface of a light guide layer 24 and a light screening pattern 251 is disposed on the light screening layer 25.

In detail, the light screening layer 25 may be disposed on the top surface of the light guide layer 24. Also, a plurality of light screening patterns 251 may be disposed on the light screening layer 25. The light screening patterns 251 may be disposed around a hollow 242 in which a light source 22 is received to prevent hot spot from occurring.

The light screening pattern 251 may be a partial reflection pattern in which at least one portion of light emitted from the light source 22 is transmitted and the other portion of the light is reflected, like the reflector 241. Also, the light screening layer 25 may be a pattern layer on which the plurality of light screening patterns 251 are printed on a transparent film. The light screening patterns 251 may have the same shape and material as those of a light extraction pattern 231 disposed on the second layer 23.

Also, as shown in Fig. 7, the light screening patterns 251 may be disposed on a bottom surface or a top surface of a film forming the light screening layer 25.

Fig. 8 is a cross-sectional view of a backlight unit according to a third embodiment.

Referring to Fig. 8, the current embodiment is equal to the foregoing embodiment except that a reflector 241 is attached to a light screening layer 25 in one body.

In detail, as described in Fig. 7, the light screening layer 25 may be disposed on a top surface of a light guide layer 24. Also, a plurality of light screening patterns 251 may be disposed on a top or bottom surface of the light screening layer 25 corresponding to a surrounding area of a light source 22. Also, a reflector 252 may be attached to a bottom surface of the light screening layer 25 in one body. Here, the reflector 252 may be a reflector equal to that 241 according to the foregoing embodiment.

In the process of integrally attaching the reflector 252 to the bottom surface of the light screening layer 25, the reflector 252 may be attached to the bottom surface of the light screening layer 25 using an adhesive. Alternatively, the reflector 25 may be integrally attached to the bottom surface of the light screening layer 25 in a process of manufacturing a film of the light screening layer 25.

Also, the position on which the reflector 252 is disposed may be a bottom surface of the light screening layer 25 facing a hollow 242 defined in the light guide layer 24.

Fig. 9 is a cross-sectional view of a backlight unit according to a fourth embodiment.

Referring to Fig. 9, like the embodiment of Fig. 8, a light screening layer 25 is disposed on a top surface of a light guide layer 24, and a light screening pattern 251 is disposed on a top and bottom surface of the light screening layer 25 corresponding to a surrounding area of a light source 22.

In addition, when the light screening layer 25 is seated on a specific position of the light screening layer 25, i.e., the light guide layer 24, a forming or drawing process may be performed on a position corresponding to a hollow 242 to form a forming part 253. Also, a reflector 241 may be attached to a bottom surface of the forming part 253. The reflector 241 may have the same shape as that of the forming part 253.

Here, the forming part 253 may have an inclined structure which has a width gradually decreasing toward the light source 22. As described above, the forming part 253 may have various shapes such as a square shape, a rectangular shape, and a circular shape in transection. However, the forming part 253 may have an inverted triangular shape or a trapezoid shape in longitudinal section. Thus, light emitted upward from the light source 22 may be incident into the reflector 241 attached to the bottom surface of the forming part 253 and then diffused laterally. Also, a portion of the light emitted from the light source 22 may pass through the light screening layer 25 to proceed toward a display panel.

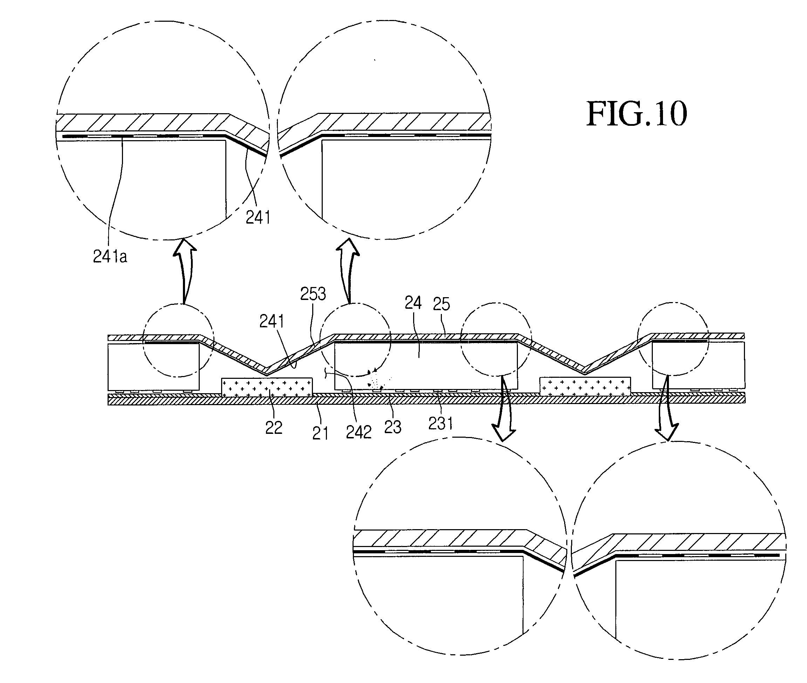

Fig. 10 is a cross-sectional view of a backlight unit according to a third embodiment.

Referring to Fig. 10, in the current embodiment, a light screening pattern 241a is disposed on a reflector 241.

In detail, a forming part 253 for a forming process is disposed on the light screening layer 25. Also, like the fourth embodiment, a reflector 241 is attached to a bottom surface of the forming part 253. However, unlike the fourth embodiment, a light screening pattern 241a disposed on the light screening layer 25 is disposed on the reflector 241.

Particularly, an upper end of the reflector 241 may extend in a horizontal direction or a radius direction and then be hooked on a top surface of the light guide layer 24. The light screening pattern 241a is disposed on a portion of the reflector 241 on which the light guide layer 24 is hooked.

Thus, the reflector 241 may perform a function which laterally reflects a portion of light emitted from a light source 22 as well as a function which prevents light concentrated around the light source 22 from being transmitted toward a display panel. That is, a portion of light concentrated around the light source 22 may be reflected by a light screening pattern 241a disposed on the reflector 241 to diffuse the reflected light into the light guide layer 24.

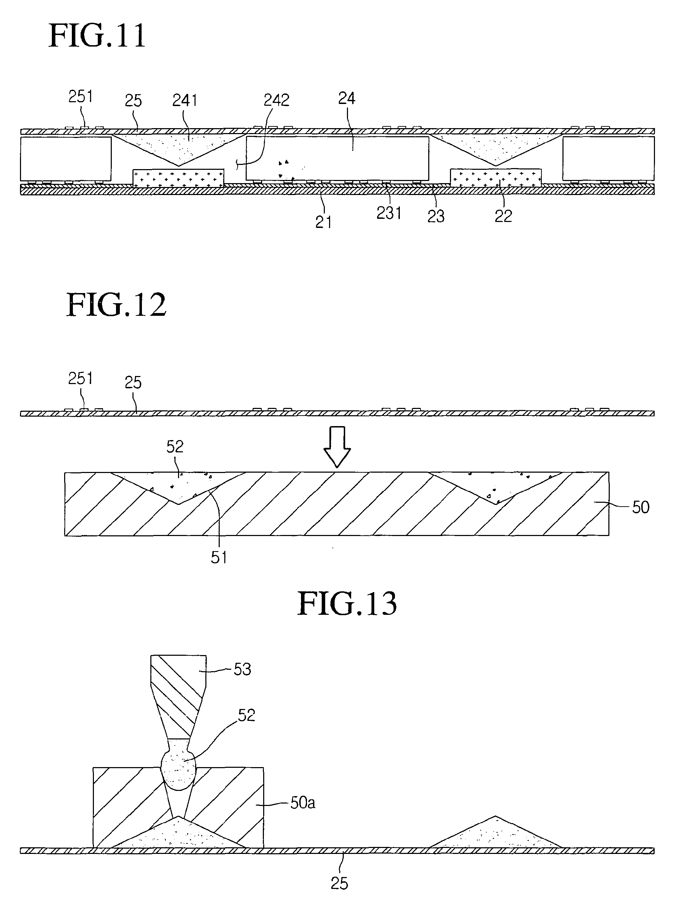

Fig. 11 is a cross-sectional view of a backlight unit according to a sixth embodiment.

Referring to Fig. 11, in the current embodiment, a reflective material 241 for performing the same function as that of the above-described reflector is deposited on a bottom surface of a light guide layer 25.

In detail, like the second embodiment of Fig. 7, a light screening layer 25 on which a light screening pattern 251 is disposed may be seated on a top surface of a light guide layer 24. However, unlike the second embodiment, the reflective material is disposed directly above a light source 22 to perform the function of the reflector 241. Here, since the reflector has the same function as that of the reflective material, the same reference numeral may be used for the reflector and the reflective material.

Also, the reflective material 241 may be inclined in a direction in which a width thereof is gradually decreased in section. Thus, light emitted from the light source 22 may be laterally reflected.

Alternatively, a film type reflector 241 may be attached to a bottom surface of a light screening layer 25. Also, a reflective material may be filled between the light screening layer 25 and the reflector 241.

Fig. 12 is a view illustrating a process of attaching a reflective material of Fig. 11 to a bottom surface of a light shield layer.

Referring to Fig. 12, to attach a reflective material 241 to a bottom surface of a light screening layer 25, a mold 50 having a recessed potion with a shape corresponding to that of the reflective material 241 is prepared. Then, the reflective material may pure into the recessed portion, and a film for forming a light screening layer 25 is seated on the mold 50. Then, the reflective material 241 may be attached to a bottom surface of the light screening layer 25 and cured. When the reflective material is completely cured, the mold 50 is moved.

Fig. 13 is a view illustrating another example of the process of attaching the reflective material of Fig. 11 to the bottom surface of the light shield layer.

Referring to Fig. 13, a light screening layer 25 may be turned over to allow a bottom surface thereof to face an upper side. Then, a reflective material is seated on a flat surface of the light screen layer 25. A mold 50a may be disposed so that a space having a shape corresponding to that of a reflective material is positioned above the light screening layer 25. Also, a gate 53 for injecting the reflective material may descend to approach a mold 50a. In this state, when the reflective material is injected through the gate 53, the reflective material may be injected into an inner space defined in the moid 50a. When the reflective material is completely injected, the reflective material may be cured in a state where the reflective material is attached to the light screening layer 25. When the curing process is finished, the mold 50a is moved.

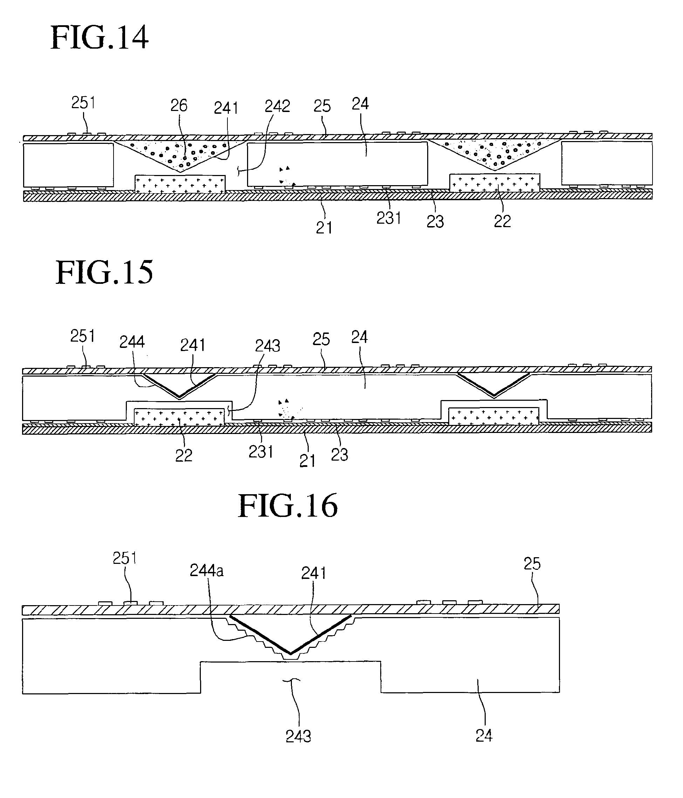

Fig. 14 is a cross-sectional view of a backlight unit according to a seventh embodiment.

Referring to Fig. 14, the current embodiment has the same structure as the sixth embodiment except that a diffusion material 26 is contained in a reflective material. In detail, a plurality of diffusion materials 26 having particles may be contained in the reflective material 241. Thus, a portion of light emitted from a light source 22 may be directly reflected by a surface of the reflective material 241, as well as a portion of light transmitting the reflective material 241 may be bump against the diffusion material 26 and thus diffused in various directions. Thus, the possibility of occurrence of hot spot in a region defined directly above the light source may be reduced. Therefore, the backlight unit 20 may have uniform brightness.

Fig. 15 is a cross-sectional view of a backlight unit according to an eight embodiment.

Referring to Fig. 15, the current embodiment is equal to the foregoing embodiments in that a light screening layer 25 is seated on a top surface of a light guide layer 24 except that a reflection groove 244 for seating a reflector 241 on the top surface of the light guide layer 24 is defined and the reflector 241 is seated on a surface of the reflection groove 244.

Also, a groove for surrounding a light source 22 may be defined, unlike that a hollow 242 for receiving a light source 22 is defined in the light guide layer 24 as described above.

In detail, the reflection groove 244 may be recessed at a depth in which the reflection groove 244 is not connected to the groove 243. Also, the reflection groove 244 may be recessed in the same shape as that of the reflector 241.

Thus, light emitted from the light source 22 may be refracted by the reflection groove 244. In detail, due to a refractive index difference between a material forming the light guide layer 24 and air, the light may be refracted by the reflection groove 244. Also, the light may be partially reflected and refracted by an interface between the reflection groove 244, i.e., the light guide layer and air according to an angle of the emitting light. Alternatively, the light may be totally reflected by the interface between the light guide layer and the air according to an angle of the emitting light.

Light refracted by the reflection groove 244 to go straight may be partially transmitted or reflected by the reflector 241. Thus, in the structure in which the reflector 241 is attached to the reflection groove 244, the light emitted from the light source 22 may be reflected two times. Thus, the light may be effectively reflected into the light guide layer 24. In addition, since the light is reflected in various directions within the light guide layer 24, brightness uniformity of the backlight unit 20 may be very effectively achieved. A structure in which a light screen pattern 251 is disposed on a top or bottom surface of the light guide layer 25 may be equal to that of the foregoing embodiment.

Fig. 16 is a cross-sectional view of a backlight unit according to a ninth embodiment.

Referring to Fig. 16, although a first layer 21, a light source 22, and a second layer 23 are omitted, the current embodiment may have the same structure and function as those of the foregoing embodiments.

The current embodiment is equal to the eight embodiment except that a reflection groove 244a having a plurality of stepped portions is defined.

In detail, since the plurality of stepped portions are defined in the reflection groove 244a, light emitted from the light source 22 may be reflected in further various directions when compared to that of the eighth embodiment. The more the light emitted from the light source 22 is reflected in many directions, the more the possibility of occurrence of hot spot is reduced. Thus, the brightness of the backlight unit 20 may become further uniform.

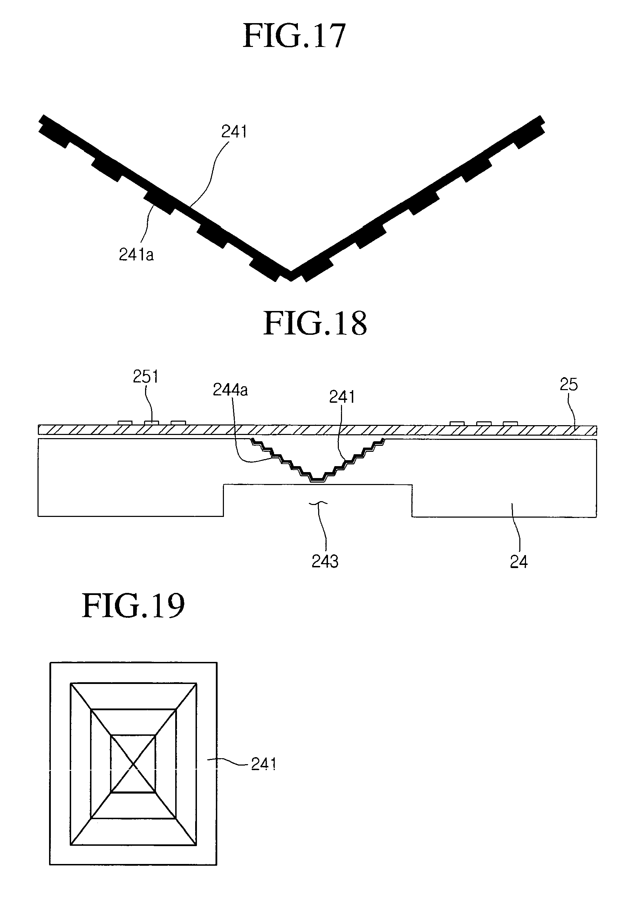

Fig. 17 is a view illustrating a structure of a reflective sheet according to another embodiment.

Referring to Fig. 17, a reflection pattern 241b is disposed on a bottom surface of a reflector 241.

In detail, in case of the above-described reflector 241, the reflector 241 is formed of a material which partially transmits and reflects light in itself. However, in the current embodiment, a separate reflection pattern 241a is disposed on a film formed of a transparent material to form a reflector. That is, light incident into the reflection pattern 241b may be re-reflected into a light guide layer 24, and light incident into portions except the reflection pattern 241b may be transmitted to proceed toward a display panel. The reflector according to the current embodiment may have the same function and effect as those of the reflector according to the foregoing embodiments.

Fig. 18 is a cross-sectional view of a backlight unit according to a tenth embodiment.

FIG. 19 is a plan view of a reflective sheet seated on the backlight unit according to the tenth embodiment.

Referring to Figs. 18 and 19, the current embodiment has the same structure as that of the ninth embodiment except that a reflector 241 has the same shape as that of a stepped portion of a reflection groove 244.

In detail, since the reflector 241 on which the reflection groove 244a is seated is stepped with the same shape as that of the stepped portion of a reflection groove 244a, the reflector 241 may be more closely attached to the reflection groove 244a.

Light emitted from a light source 22 may be incident into the reflection groove 244a and then primarily reflected and refracted. Then, like the ninth embodiment, a portion of the light refracted by the reflection groove 244a may be secondarily reflected and the other portion of the light may be transmitted.

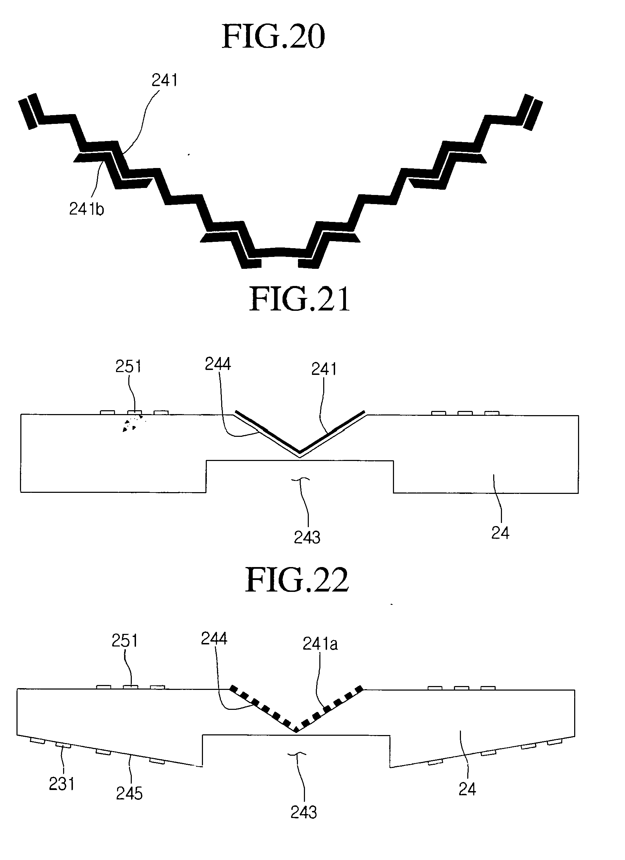

Fig. 20 is a view illustrating a structure of a reflective sheet according to another embodiment.

Referring to Fig. 20, like the structure of Fig. 17, a reflection pattern 241b is disposed on a bottom surface of a reflector 241. The reflector 241 may have a stepped portion which is stepped several times as shown in Figs. 18 and 19.

In detail, the reflector 241 has a structure in which a reflection pattern 241b is disposed along a stepped portion on a bottom surface of a transparent film having a plurality of stepped portions. Thus, light emitted from a light source 22 may be partially reflected and transmitted. Also, as described above, since a reflector 241 is stepped several times, light bumping against the reflector 241 may be reflected in various directions.

Fig. 21 is a cross-sectional view of a backlight unit according to an eleventh embodiment.

Referring to Fig. 21, the current embodiment has the same structure as the eighth embodiment except that a light screening pattern 251 is directly disposed on a top surface of a light guide layer 24.

Although a first layer 21, a light source 22, and a second layer 23 are omitted, the current embodiment may have the same structure and function as those of the eighth embodiment.

In detail, a light screening pattern 251 may be deposited or printed on a top surface of a light guide layer 24. Thus, it may be necessary to mount a separate film for a light screen layer 25 on the top surface of the light guide layer 24.

Fig. 22 is a cross-sectional view of a backlight unit according to a twelve embodiment.

Similar to Fig. 21, in Fig. 22, although a first layer 21, a second layer 23, and a light source 22 are omitted, the current embodiment may have the same structure and function as those of the eleventh embodiment.

In detail, according to the current embodiment, a separate reflector is not seated on a reflection groove 244, but a reflection pattern 241a is directly disposed on the reflection groove 244. Alternatively, a light screening pattern 251 may be directly disposed on a top surface of the light guide layer 24 or a separate light screening layer may be seated on the top surface of the light guide layer 24.

Also, according to the current embodiment, the light guide layer has an inclined bottom surface. A light extraction pattern 231 may be directly disposed on the inclined bottom surface of the light guide layer 24.

As shown in Fig. 22, since the light guide layer has the inclined bottom surface, an air layer may be defined between the second layer 23 and the light guide layer 24. Also, the bottom surface of the light guide layer 24 may become an interface between media having refractive indexes different from each other. That is, due to a refractive index different between a resin material for forming the light guide layer 24 and the air, light may be totally reflected by the inclined bottom surface of the light guide layer 24.

That is, a portion of the light incident into the bottom surface of the light guide layer 24 may be incident at an angle equal to or greater than a total reflection critical angle and then totally reflected toward a display panel. Also, light incident at an angle equal to or less than a critical angle may transmit the light guide layer 24 and be incident into the second layer 23. Also, the light incident into the second layer 23 may be re-reflected due to the reflection characteristic of the second layer 23 to bump against the bottom surface of the light guide layer 24. Also, a portion of the light pumping against the bottom surface of the light guide layer 24 may be totally reflected due to a refractive index difference between media or may bump against the light extraction pattern 231 and thus be reflected again.

Due to the reflection and re-reflection, light incident between the inclined bottom surface of the light guide layer 24 and the second layer 23 may be horizontally diffused. Thus, due to the movement of the light, the brightness of the backlight unit 20 may become uniform.

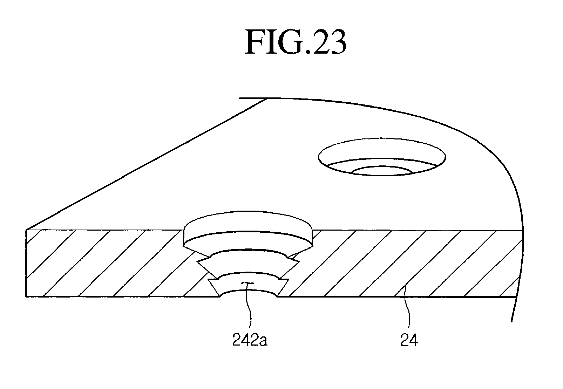

Fig. 23 is a cut-away perspective view illustrating a structure of a light guide layer according to another embodiment.

Referring to Fig. 23, a hollow 242a of a light guide layer 24 for receiving a light source 22 may be punched in a shape stepped several times. In the foregoing embodiments, the side surface of the hollow 242 may be punched in a vertical shape. However, according to the current embodiment, the hollow 242a has a stepped in a sectional shape similar to that of a Fresnel lens.

As described above, when the hollow 242a is punched in a shape in which a side surface is stepped and a diameter is decreased, the light emitted from the light source 22 may be reflected and refracted in many directions as shown in Figs. 16 to 18. Thus, the backlight unit 20 may have uniform brightness.

In the display apparatus according the embodiments, the light emitted from the top view type LED light source which emits light forward (or upward) may be effectively coupled in a lateral direction. That is, the top emission LED may be realized as a lateral emission LED.

Also, according to the above-described structure, a planar light source having high efficiency may be realized at a thickness less than that of an existing planar light source.

Also, a planar light source having advantages of existing edge type and direct type LEDs may be realized.

Also, the LED packages may be two-dimensionally arranged to realize local dimming.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display apparatus comprising:
a display panel; and
a backlight unit disposed at a rear side of the display panel to provide light, wherein the backlight unit comprises:
a first layer;
a light source disposed on the first layer;
a light guide layer having a hollow for receiving the light source, the light guide layer being disposed above the first layer to transmit and diffuse light emitted from the light source; and
a reflection member disposed in the hollow to reflect at least one portion of the light emitted from the light source to the display panel toward the inside of the light guide layer.

2. The display apparatus according to claim 1,
further comprisng a second layer disposed between the light guide layer and the first layer to re-reflect the light reflected and incident by the reflection member toward the display panel.

3. The display apparatus according to claim 2,
further comprising a plurality of light extraction pattern disposed on a bottom surface of the light guide layer or a top surface of the second layer.

4. The display apparatus according to claim 3,
wherein the light guide layer has a horizontal or inclined bottom surface.

5. The display apparatus according to claim 1,
wherein the reflection member is formed of a material which partially transmits and reflects a portion of the light emitted from the light source.

6. The display apparatus according to claim 1,
wherein the reflection member is inclinedly recessed in a direction in which a width thereof is decreased toward the light source.

7. The display apparatus according to claim 6,
wherein the reflectiion member has a polygonal or circular shape in section.

8. The display apparatus according to claim 1,
wherein an upper end of the reflection member is bent or extends in a horizontal or radius direction and is hooked on a top surface of the light guide layer.

9. The display apparatus according to claim 1,
further comprisnig a light screening layer disposed on a top surface of the light guide layer and having a light screening pattern in an area corresponding to a surrounding area of the light source.

10. The display apparatus according to claim 9, wherein the reflection member is attached to a bottom surface of the light screening layer or integrated with the light screening layer.

11. The display apparatus according to claim 9,
wherein the reflection member comprises a reflective material cured on a bottom surface of the light screening layer.

12. The display apparatus according to claim 11,
wherein a plurality of diffusion particles are contained in the reflection material.

13. The display apparatus according to claim 9,
wherein a forming part recessed in shape which is gradually decreased in width is defined in the light screening layer, and the reflection member is attached to the forming part.

14. The display apparatus according to claim 13,
wherein an upper end of the reflection member extends in a horizontal or radius direction and is hooked on the light guide layer, and the light screening pattern is dispsoed on the portion at which the upper end of the reflection member is hooked on the light guide layer.

15. The display apparatus according to claim 1,
wherein the reflection member comprises a reflector formed of aluminum or silver.

16. A display apparatus comprising:
a display panel; and
a backlight unit disposed at a rear side of the display panel to provide light, wherein the backlight unit comprises:
a first layer;
a light source disposed on the first layer;
a reflection member reflecting at least one portion of ligth emitted from the light source to the display panel; and
a light guide layer disposed on the first layer to transmit and diffuse the light emitted from the light source, wherein a groove for receiving the light source is defined in a bottom surface of the light guide layer, and
a reflection groove for receiving the reflection member is defined in a top surface of the light guide layer.

17. The display apparatus according to claim 16,
further comprising a second layer disposed between the light guide layer and the first layer to re-reflect the light reflected and incident by the reflection member toward the display panel.

18. The display apparatus according to claim 17,
wherein the reflection member has the same shape as that of the reflection groove and comprises a reflector seated on the reflection groove,
and/or wherein the reflection member comprises a reflection pattern directly disposed on the reflection groove,
and/or wherein the the light guide layer has a horizontal or inclined bottom surface, and a plurality of light extraction patterns are disposed on a top surface of the second layer or the bottom surface of the light guide layer,
and/or wherein the reflection groove is stepped several times, and the reflection member is stepped in the same shape as that of the reflection groove,
and/or wherein the reflection member comprises a reflection sheet in which a reflection pattern is disposed on a top or bottom surface of a film through which light is transmitted.

19. The display apparatus according to claim 16,
wherein the reflection member comprises a reflector formed of aluminum or silver.
